# EUROPEAN PATENT APPLICATION

(11) **EP 3 647 160 A1**
(43) Date of publication of application: **06.05.2020**
(21) Application number: 19205938.4
(22) Date of filing: 29.10.2019
(51) Int. Cl.: B62D 6/00, B62D 5/04

(54) **STEERING CONTROL DEVICE**

(30) Priority: 30.10.2018 JP 2018204102
(71) Applicant: JTEKT CORPORATION, Osaka-shi Osaka 542-8502 (JP)
(72) Inventor: KODERA, Takashi, Osaka-shi, Osaka 542-8502 (JP)
(74) Representative: Winter, Brandl, Fürniss, Hübner, Röss, Kaiser, Polte - Partnerschaft mbB

(57) **Abstract**

A target assist torque calculation unit (61) includes a target steering torque calculation unit (73) that calculates a target steering torque (Th*) as a target value of a steering torque (Th), and a torque feedback control unit (74) that calculates a torque feedback component (Tfb) by performing control that makes the steering torque (Th) follow the target steering torque (Th*). The target steering torque calculation unit (73) calculates the target steering torque (Th*) having an absolute value that increases as an absolute value of a reaction force component (Fir) increases. When the reaction force component (Fir) exceeds a threshold torque, that is, when the absolute value of the target steering torque (Th*) exceeds a maximum torque detectable by a torque sensor, the target assist torque calculation unit (61) sets the torque feedback component (Tfb) to zero, and sets a target assist torque (Ta*) to zero.

## Description

### BACKGROUND OF THE INVENTION

### 1. Field of the Invention

The present invention relates to a steering control device.

### 2. Description of Related Art

An electric power steering system (EPS) is a steering system for vehicles that includes an assist mechanism having a motor as a drive source to apply an assist torque for assisting a steering operation to a steering mechanism. A steering control device that controls such an EPS is disclosed in, for example, Japanese Unexamined Patent Application Publication No. 2006-175940 (JP 2006-175940 A). The disclosed steering control device includes a first reference model that determines a target steering torque based on a steering angle, and a second reference model that determines a target steered angle based on a steering torque, and controls an operation of a motor based on the two reference models. According to this steering control device, with a first assist component obtained by performing torque feedback control that makes an actual steering torque follow a target steering torque, the steering torque can be set to an appropriate value. Moreover, with a second assist component obtained by performing angle feedback control that makes an actual steered angle follow a target steered angle, vibration reversely input from the steered wheels can be canceled.

Here, the absolute value of a torque (maximum torque) detectable by a torque sensor that detects a steering torque input to an EPS is determined in advance based on its specifications. Therefore, if the absolute value of the target steering torque exceeds the maximum torque, the steering torque actually detected is not accurate. Consequently, the steering torque cannot appropriately follow the target steering torque, resulting in degradation of steering feeling.

This problem is not limited to EPSs, but also occurs to steer-by-wire steering systems in which power transmission is separated between a steering unit steered by the driver and a turning unit that turns steered wheels in accordance with steering by the driver, when applying a steering reaction force calculated by performing torque feedback control.

### SUMMARY OF THE INVENTION

An object of the present invention is to provide a steering control device that minimizes degradation of steering feeling.

According to an aspect of the present invention, there is provided a steering control device that controls a steering system, the steering system including an assist mechanism having a motor as a drive source to apply an assist torque for assisting a steering operation to a steering mechanism, the steering control device controlling an operation of the motor to generate a motor torque corresponding to a target assist torque as a target value of the assist torque, the steering control device including:
a target assist torque calculation unit that calculates the target assist torque; wherein:
the target assist torque calculation unit includes
   a target steering torque calculation unit that calculates a target steering torque as a target value of a steering torque detected by a torque sensor, and
   a torque feedback control unit that calculates a torque feedback component, by performing torque feedback control that makes the steering torque follow the target steering torque;
the target assist torque calculation unit calculates the target assist torque based on the torque feedback component; and
when an absolute value of the target steering torque exceeds a maximum torque detectable by the torque sensor, the target assist torque calculation unit calculates the target assist torque, based on the torque feedback component having an absolute value smaller than when the absolute value of the target steering torque does not exceed the maximum torque.

According to the above configuration, in the case where the steering torque cannot be accurately detected due to the absolute value of the target steering torque exceeding the maximum torque detectable by the torque sensor and hence the torque feedback component may take an abnormal value, the target assist torque is calculated based on the torque feedback component with a reduced absolute value. This appropriately minimizes degradation of steering feeling due to application of an abnormal assist torque.

According to another aspect of the present invention, in the steering control device of the above aspect, when the absolute value of the target steering torque exceeds the maximum torque, the target assist torque calculation unit may calculate the target assist torque based on the torque feedback component that is set to zero.

According to the above configuration, in the case where the torque feedback component may take an abnormal value, the torque feedback component is set to zero. This appropriately minimizes degradation of steering feeling due to application of an abnormal assist torque.

According to still another aspect of the present invention, in the steering control device of the above aspect, the target assist torque calculation unit may further include an axial force calculation unit that calculates an axial force applied from steered wheels to a steered shaft to which the steered wheels are connected, and a restriction reaction force calculation unit that, when turning of the steered wheels in at least one direction is restricted, calculates a restriction reaction force for restricting steering that turns the steered wheels in the at least one direction; and the target steering torque calculation unit may calculate, using a reaction force component based on the axial force and the restriction reaction force, the target steering torque such that the absolute value of the target steering torque increases as an absolute value of the reaction force component increases.

According to the above configuration, in response to application of the restriction reaction force when turning of the steered wheels in at least one direction is restricted, the target steering torque may exceed the maximum torque. However, according to the above configuration, when the target steering torque exceeds the maximum torque, the target assist torque is calculated based on the torque feedback component with a reduced absolute value. Therefore, when turning of the steered wheels in at least one direction is restricted, it is possible to prevent degradation of steering feeling due to application of an abnormal assist torque.

According to still another aspect of the present invention, in the steering control device of the above aspect, when turning of the steered wheels in at least one direction is restricted and the absolute value of the target steering torque exceeds the maximum torque, the target assist torque calculation unit may calculate the target assist torque based on the torque feedback component and the restriction reaction force.

According to the above configuration, when turning of the steered wheels in at least one direction is restricted, since the target assist torque is calculated based on the restriction reaction force, a negative assist torque (reaction force against steering) can be applied, for example. Therefore, it is possible to appropriately prevent further steering in a direction in which turning of the steered wheels is restricted.

According to still another aspect of the present invention, there is provided a steering control device that controls a steering system, the steering system being configured such that power transmission is disconnected between a steering unit and a turning unit that turns steered wheels in accordance with steering input to the steering unit, the steering control device controlling an operation of a steering-side motor provided in the steering unit to generate a motor torque corresponding to a target reaction force torque as a target value of a steering reaction force against the steering input to the steering unit, the steering control device including:
a target reaction force torque calculation unit that calculates the target reaction force torque; wherein:
the target reaction force torque calculation unit includes
   an axial force calculation unit that calculates an axial force applied from the steered wheels to a steered shaft to which the steered wheels are connected,
   a restriction reaction force calculation unit that, when turning of the steered wheels in at least one direction is restricted, calculates a restriction reaction force for restricting steering that turns the steered wheels in the at least one direction,
   a target steering torque calculation unit that calculates, using a reaction force component based on the axial force and the restriction reaction force, a target steering torque as a target value of a steering torque detected by a torque sensor such that an absolute value of the target steering torque increases as an absolute value of the reaction force component increases, and
   a torque feedback control unit that calculates a torque feedback component, by performing torque feedback control that makes the steering torque follow the target steering torque;
the target reaction force torque calculation unit calculates the target reaction force torque based on the torque feedback component; and
when the absolute value of the target steering torque exceeds a maximum torque detectable by the torque sensor, the target reaction force torque calculation unit calculates the target reaction force torque, based on the torque feedback component having an absolute value smaller than when the absolute value of the target steering torque does not exceed the maximum torque and the restriction reaction force.

According to the above configuration, in the case where the steering torque cannot be accurately detected due to the absolute value of the target steering torque exceeding the maximum torque detectable by the torque sensor and hence the torque feedback component may take an abnormal value, the target assist torque is calculated based on the torque feedback component with a reduced absolute value and the restriction reaction force. This prevents application of a steering reaction force based on an abnormal torque feedback component, and minimizes degradation of steering feeling. Further, since the steering reaction force based on the restriction reaction force is applied, it is possible to appropriately prevent further steering in a direction in which turning of the steered wheels is restricted.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic configuration diagram of a steering system according to a first embodiment;
FIG. 2 is a block diagram of a steering control device according to the first embodiment;
FIG. 3 is a block diagram of a reaction force component calculation unit according to the first embodiment;
FIG. 4 is a schematic configuration diagram of a steering system according to a third embodiment;
FIG. 5 is a block diagram of a steering control device according to a third embodiment; and
FIG. 6 is a schematic configuration diagram of a steering system according to a modification.

### DETAILED DESCRIPTION OF EMBODIMENTS

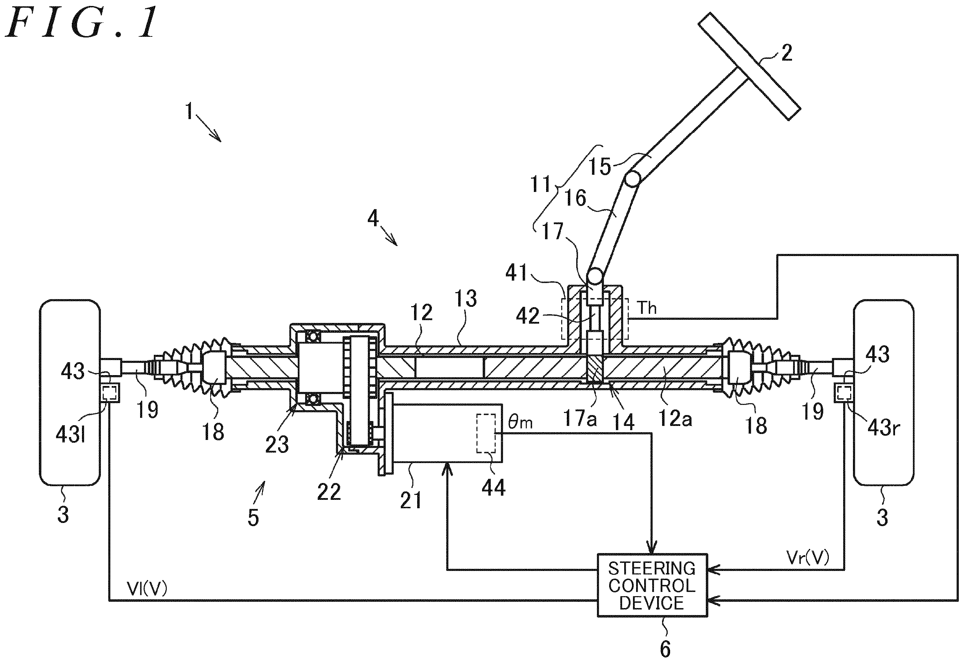

Hereinafter, a steering control device according to a first embodiment will be described with reference to the drawings. As illustrated in FIG. 1, a steering system 1 as a control object is configured as an electric power steering system (EPS). The steering system 1 includes a steering mechanism 4 that turns steered wheels 3 in accordance with a driver's operation of a steering wheel 2, an assist mechanism 5 that applies an assist torque (assist force) for assisting a steering operation to the steering mechanism 4, and a steering control device 6 that controls the operation of the assist mechanism 5.

The steering mechanism 4 includes a steering shaft 11 to which the steering wheel 2 is fixed, a rack shaft 12 serving as a steered shaft coupled to the steering shaft 11, a rack housing 13 reciprocally accommodating the rack shaft 12, and a rack-and-pinion mechanism 14 that converts a rotation of the steering shaft 11 into a reciprocating motion of the rack shaft 12. The steering shaft 11 includes a column shaft 15, an intermediate shaft 16, and a pinion shaft 17 connected in this order from the side on which the steering wheel 2 is located.

The rack shaft 12 and the pinion shaft 17 are arranged at a prescribed crossing angle relative to each other in the rack housing 13. Rack teeth 12a formed on the rack shaft 12 and pinion teeth 17a formed on the pinion shaft 17 mesh with each other, thereby forming a rack-and-pinion mechanism 14. A tie rod 19 is rotatably coupled to each end of the rack shaft 12 via a rack end 18 including a ball joint at the shaft end portion. A distal end of the tie rod 19 is coupled to a knuckle (not illustrated) to which the steered wheel 3 is attached. Accordingly, in the steering system 1, a rotation of the steering shaft 11 in accordance with a steering operation is converted into an axial movement of the rack shaft 12 by the rack-and-pinion mechanism 14. The axial movement is transmitted to the knuckles via the tie rods 19, so that a steered angle of the steered wheels 3, that is, the moving direction of the vehicle, is changed.

The assist mechanism 5 includes a motor 21 serving as a drive source, a transmission mechanism 22 that transmits a rotation of the motor 21, and a conversion mechanism 23 that converts the rotation transmitted through the transmission mechanism 22 into a reciprocating motion of the rack shaft 12. The assist mechanism 5 causes the transmission mechanism 22 to transmit a rotation of the motor 21 to the conversion mechanism 23, and causes the conversion mechanism 23 to convert the rotation into a reciprocating motion of the rack shaft 12, thereby applying an assist torque to the steering mechanism 4. The motor 21 of the present embodiment is, for example, a three-phase brushless motor; the transmission mechanism 22 is, for example, a belt mechanism; and the conversion mechanism 23 is, for example, a ball screw mechanism.

A torque sensor 41 that detects a steering torque Th applied to the steering shaft 11 by a driver's steering operation is connected to the steering control device 6. The torque sensor 41 is disposed on the pinion shaft 17, and detects the steering torque Th based on a torsion amount of a torsion bar 42. A detectable maximum torque Tmax is set in advance for the torque sensor 41 based on the specifications such as the elastic coefficient and the size of the torsion bar 42. A right front wheel sensor 43r and a left front wheel sensor 431 are provided on a hub unit 43 that rotatably supports the steered wheels 3 via a drive shaft (not illustrated). The right front wheel sensor 43r and the left front wheel sensor 431 are connected to the steering control device 6. The right front wheel sensor 43r and the left front wheel sensor 431 detect wheel speeds Vr and Vl of the respective steered wheels 3. The steering control device 6 of the present embodiment detects an average value of the wheel speeds Vr and Vl as a vehicle speed V. A rotation sensor 44 is also connected to the steering control device 6. The rotation sensor 44 detects a motor angle θm of the motor 21 as a relative angle within 360°. The detected steering torque Th and motor angle θm take a positive value when steering is performed in a first direction (right in the present embodiment), and take a negative value when steering is performed in a second direction (left in the present embodiment). The steering control device 6 supplies drive power to the motor 21 based on the state quantities input from the sensors, thereby controlling the operation of the assist mechanism 5, that is, an assist torque to be applied to the steering mechanism 4 so as to reciprocate the rack shaft 12.

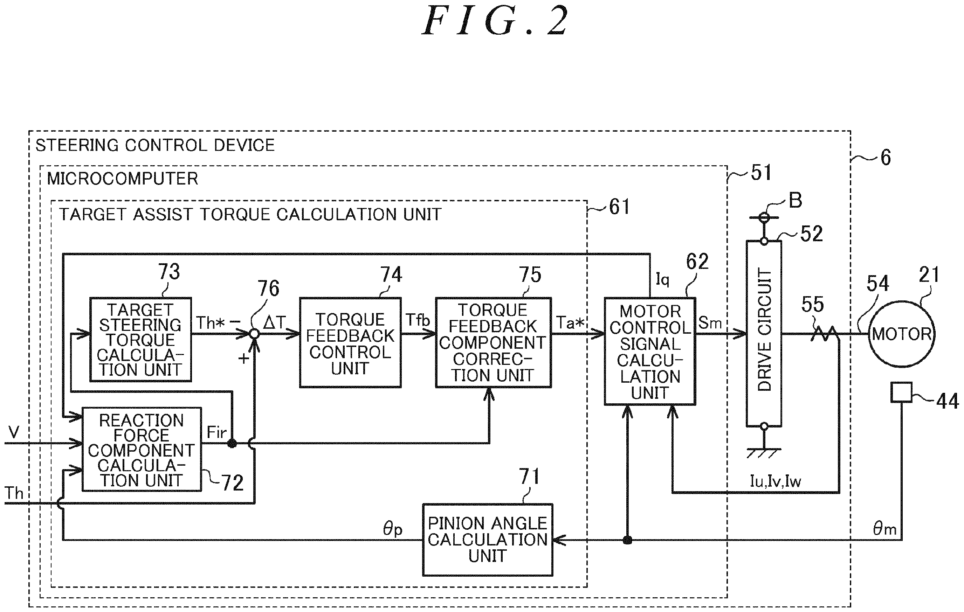

In the following, the configuration of the steering control device 6 will be described. As illustrated in FIG. 2, the steering control device 6 includes a microcomputer 51 that outputs a motor control signal Sm, and a drive circuit 52 that supplies drive power to the motor 21 based on the motor control signal Sm. The drive circuit 52 of the present embodiment is a known PWM inverter including a plurality of switching elements (such as FETs). The motor control signal Sm output by the microcomputer 51 is a signal that determines the ON/OFF state of each switching element. Each switching element is turned ON or OFF in response to the motor control signal Sm, so that the energization pattern to a motor coil of each phase is changed. As a result, a direct current of an in-vehicle battery B is converted into three-phase drive power. The three-phase drive power is output to the motor 21. Note that control blocks described below are implemented by a computer program executed by the microcomputer 51. The control blocks detect state quantities at prescribed sampling intervals (detection intervals). Calculation processes indicated by the respective control blocks described below are executed at prescribed calculation intervals.

The microcomputer 51 receives the vehicle speed V, the steering torque Th, and the motor angle θm described above. The microcomputer 51 also receives phase current values Iu, Iv, and Iw of the motor 21 detected by current sensors 55 disposed on connection lines 54 between the drive circuit 52 and the motor coils of respective phases. In FIG. 2, the connection lines 54 of the respective phases and the current sensors 55 of the respective phases are collectively depicted as a single connection line 54 and a single current sensor 55, respectively, for the sake of convenience. Then, the microcomputer 51 outputs the motor control signal Sm based on these state quantities.

Specifically, the microcomputer 51 includes a target assist torque calculation unit 61 that calculates a target assist torque Ta*, and a motor control signal calculation unit 62 that calculates the motor control signal Sm. The target assist torque calculation unit 61 calculates the target assist torque Ta* corresponding to the assist torque to be applied by the steering mechanism 4 as will be described below.

The motor control signal calculation unit 62 calculates target current values Id* and Iq* as target values of drive currents to be supplied to the motor 21, based on the target assist torque Ta*. The target current values Id* and Iq* respectively indicate a target current value on the d-axis and a target current value on the q-axis in the dq coordinate system. The motor control signal calculation unit 62 calculates the q-axis target current value Iq* having an absolute value that increases as the absolute value of the target assist torque Ta* increases. The d-axis target current value Id* is basically zero. Then, the motor control signal calculation unit 62 generates the motor control signal Sm, by performing current feedback control in the dq coordinate system based on the target current values Id* and Iq*, the phase current values Iu, Iv, and Iw, and the motor angle θm of the motor 21.

Specifically, the motor control signal calculation unit 62 calculates a d-axis current value Id and a q-axis current value Iq as the actual current values of the motor 21 in the dq coordinate system, by mapping the phase current values Iu, Iv, and Iw onto the dq coordinates based on the motor angle θm. Then, to make the d-axis current value Id follow the d-axis target current value Id*, and to make the q-axis current value Iq follow the q-axis target current value Iq*, the motor control signal calculation unit 62 calculates a target voltage value based on the current deviations on the d-axis and q-axis, and calculates the motor control signal Sm having a duty ratio based on the target voltage value. Note that the q-axis current value Iq calculated in the course of generating the motor control signal Sm is output to the target assist torque calculation unit 61.

The thus calculated motor control signal Sm is output to the drive circuit 52. In response, drive power corresponding to the motor control signal Sm is supplied from the drive circuit 52 to the motor 21. Then, the motor 21 applies an assist torque indicated by the target assist torque Ta* to the steering mechanism 4.

In the following, the target assist torque calculation unit 61 will be described. The target assist torque calculation unit 61 includes a pinion angle calculation unit 71 that calculates a pinion angle θp (steering angle) of the pinion shaft 17 serving as a rotary shaft that can be converted into the steered angle of the steered wheels 3, and a reaction force component calculation unit 72 that calculates a reaction force component Fir. The target assist torque calculation unit 61 further includes a target steering torque calculation unit 73 that calculates a target steering torque Th*, and a torque feedback control unit 74 that calculates a torque feedback component Tfb by performing a torque feedback calculation. The target assist torque calculation unit 61 further includes a torque feedback component correction unit 75 that calculates, as the target assist torque Ta*, a value obtained by correcting the torque feedback component Tfb.

The pinion angle calculation unit 71 receives the motor angle θm. The pinion angle calculation unit 71 calculates the pinion angle θp indicating the rotation angle of the pinion shaft 17, based on the motor angle θm. Specifically, the pinion angle calculation unit 71 integrates (counts) the number of rotations of the motor 21 on the premise that the pinion angle θp is at the origin (zero degree) when the rack shaft 12 is located at a neutral position for the vehicle to travel straight ahead, and calculates the pinion angle θp in terms of its absolute value in the range up to and exceeding 360°, based on the number of rotations and the motor angle θm. The thus calculated pinion angle θp is output to the reaction force component calculation unit 72.

The reaction force component calculation unit 72 receives the vehicle speed V, the q-axis current value Iq, and the pinion angle θp. The reaction force component calculation unit 72 calculates the reaction force component Fir as a force against a steering operation based on these state quantities.

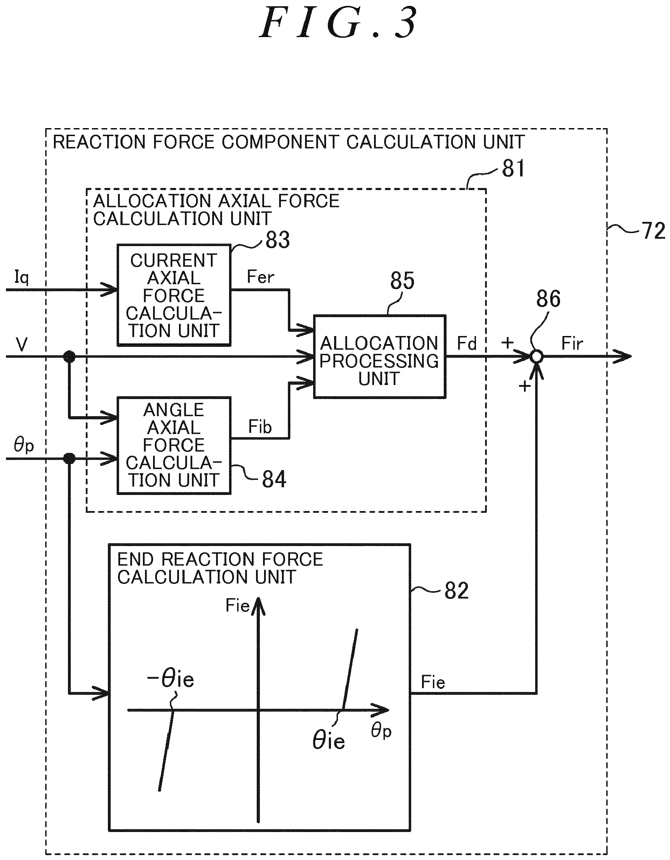

Specifically, as illustrated in FIG. 3, the reaction force component calculation unit 72 includes an allocation axial force calculation unit 81 serving as an axial force calculation unit that calculates an allocation axial force Fd as an axial force, and an end reaction force calculation unit 82 serving as a restriction reaction force calculation unit that calculates an end reaction force Fie as a restriction reaction force. The reaction force component calculation unit 72 calculates the reaction force component Fir based on the allocation axial force Fd and the end reaction force Fie.

More specifically, the allocation axial force calculation unit 81 includes a current axial force calculation unit 83 that calculate a current axial force (road surface axial force) Fer, and an angle axial force calculation unit 84 that calculates an angle axial force (ideal axial force) Fib. Note that the current axial force Fer and the angle axial force Fib are calculated in the torque dimension (N . m). The allocation axial force calculation unit 81 includes an allocation processing unit 85 that calculates, as the allocation axial force Fd, an allocation axial force obtained by allocating the current axial force Fer and the angle axial force Fib at a prescribed proportion such that the axial force applied from the road surface to the steered wheels 3 (road surface information transmitted from the road surface) is reflected.

The current axial force calculation unit 83 receives the q-axis current value Iq. The current axial force calculation unit 83 calculates the current axial force Fer to which the road surface information is reflected, based on the q-axis current value Iq. The current axial force Fer is an estimated value of the axial force applied to the steered wheels 3 (transmitted force that is transmitted to the steered wheels 3). Specifically, the current axial force calculation unit 83 calculates the current axial force Fer such that the absolute value of the current axial force Fer increases as the absolute value of the q-axis current value Iq increases, on the assumption that the torque applied to the rack shaft 12 from the motor 21 balances the torque corresponding to the force applied from the road surface to the steered wheels 3. The thus calculated current axial force Fer is output to the allocation processing unit 85.

The angle axial force calculation unit 84 receives the pinion angle θp and the vehicle speed V. The angle axial force calculation unit 84 calculates the angle axial force Fib to which the road surface information is not reflected, based on the pinion angle θp. The angle axial force Fib is an ideal value of the axial force applied to the steered wheels 3 (transmitted force that is transmitted to the steered wheels 3). Specifically, the angle axial force calculation unit 84 calculates the angle axial force Fib such that the absolute value of the angle axial force Fib increases as the absolute value of the pinion angle θp increases. Further, the angle axial force calculation unit 84 calculates the angle axial force Fib such that the absolute value of the angle axial force Fib increases as the vehicle speed V increases. The thus calculated angle axial force Fib is output to the allocation processing unit 85.

The allocation processing unit 85 receives the current axial force Fer and the angle axial force Fib. In the allocation processing unit 85, a current allocation gain Ger indicating an allocation ratio of the current axial force Fer, and an angle allocation gain Gib indicating an allocation ratio of the angle axial force Fib are set in advance through experiments. The current allocation gain Ger and the angle allocation gain Gib are variably set in accordance with the vehicle speed V. Then, the allocation processing unit 85 calculates the allocation axial force Fd, by adding together a value obtained by multiplying the angle axial force Fib by the angle allocation gain Gib and a value obtained by multiplying the current axial force Fer by the current allocation gain Ger. That is, the allocation axial force calculation unit 81 of the present embodiment obtains two axial forces, namely, the current axial force Fer and the angle axial force Fib, and calculates the allocation axial force Fd based on these two axial forces. The thus calculated allocation axial force Fd is output to an adder 86.

The end reaction force calculation unit 82 receives the pinion angle θp. The end reaction force calculation unit 82 includes a map defining the relationship between the pinion angle θp and the end reaction force Fie, and calculates the end reaction force Fie corresponding to the pinion angle θp by referring to the map. A threshold angle θie is set in the map. Thus, when the absolute value of the pinion angle θp is less than or equal to the threshold angle θie, the end reaction force Fie is calculated to be zero. On the other hand, when the absolute value of the pinion angle θp is greater than the threshold angle θie, the end reaction force Fie is calculated to be greater than zero. The thus calculated end reaction force Fie is output to the adder 86.

The threshold angle θie is set to the value of the pinion angle θp in a virtual rack end position located on the neutral-position side with respect to the mechanical rack end position where the axial movement of the rack shaft 12 is restricted due to contact of the rack end 18 with the rack housing 13. The end reaction force Fie is set to have an absolute value that is so large that further steering cannot be performed by human power when the pinion angle θp increases to a certain level over the threshold angle θie. That is, in the present embodiment, a situation where the pinion angle θp exceeds the threshold angle θie corresponds to the situation where further turning of the steered wheels 3 in the turning direction is restricted.

Then, the reaction force component calculation unit 72 calculates, as the reaction force component Fir, a value obtained by adding the end reaction force Fie to the allocation axial force Fd in the adder 86. The thus calculated reaction force component Fir is output to the target steering torque calculation unit 73 and the torque feedback component correction unit 75 (see FIG. 2).

As illustrated in FIG. 2, the target steering torque calculation unit 73 calculates the target steering torque Th*, based on the reaction force component Fir. Specifically, the target steering torque calculation unit 73 calculates the target steering torque Th* having an absolute value that increases as the absolute value of the reaction force component Fir increases. That is, the steering torque Th that the driver needs to input to the steering mechanism 4 increases as the absolute value of the reaction force component Fir increases. The thus calculated target steering torque Th* is output to a subtractor 76.

The subtractor 76 receives the steering torque Th, in addition to the target steering torque Th*. The torque feedback control unit 74 receives a torque deviation ΔT calculated by subtracting the target steering torque Th* from the steering torque Th in the subtractor 76. Then, the torque feedback control unit 74 calculates the torque feedback component Tfb as a control amount for performing feedback control to feed back the steering torque Th to the target steering torque Th*, based on the torque deviation ΔT. Specifically, the torque feedback control unit 74 calculates, as the torque feedback component Tfb, the sum of the output values of a proportional element, an integral element, and a differential element to which the torque deviation ΔT is input.

The torque feedback component correction unit 75 receives the reaction force component Fir and the torque feedback component Tfb. The torque feedback component correction unit 75 corrects the torque feedback component Tfb based on the reaction force component Fir, and calculates the target assist torque Ta* based on the corrected torque feedback component Tfb.

Specifically, the torque feedback component correction unit 75 determines whether the absolute value of the reaction force component Fir exceeds a threshold torque Tth that is set in advance. Then, when the absolute value of the reaction force component Fir is less than or equal to the threshold torque Tth, the torque feedback component correction unit 75 simply obtains the torque feedback component Tfb as the target assist torque Ta*. On the other hand, when the absolute value of the reaction force component Fir is greater than the threshold torque Tth, the torque feedback component correction unit 75 sets the torque feedback component Tfb to zero, and sets the target assist torque Ta* to zero. The value of the threshold torque Tth is set in advance such that the absolute value of the target steering torque Th* calculated based on the reaction force component Fir becomes equal to the maximum torque Tmax detectable by the torque sensor 41. That is, when the absolute value of the target steering torque Th* exceeds the maximum torque Tmax, the target assist torque calculation unit 61 calculates the target assist torque Ta* based on the torque feedback component Tfb set to zero.

In the following, the steering feeling provided by the steering control device 6 will be described.

When steering is performed within the range where the pinion angle θp does not exceed the threshold angle θie, the assist torque is applied to the steering mechanism 4 such that the steering torque Th that the driver needs to input becomes equal to the target steering torque Th* based on the reaction force component Fir. As a result, a suitable steering feeling is achieved. On the other hand, when steering is performed to a point close to the rack end and the reaction force component Fir exceeds the threshold torque Tth (the target steering torque Th* exceeds the maximum torque Tmax), the target assist torque Ta* becomes zero, and no assist torque is applied to the steering mechanism 4. As a result, the steering torque required for steering greatly increases, so that the driver is prevented from performing steering. This prevents further steering in a state where steering is performed to a point close to the rack end.

The advantageous effects of the present embodiment will be described below.
(1) In the case where the steering torque Th cannot be accurately detected due to the absolute value of the target steering torque Th* exceeding the maximum torque Tmax and hence the torque feedback component Tfb may take an abnormal value, the target assist torque calculation unit 61 sets the torque feedback component Tfb to zero, and calculates the target assist torque Ta* based on the torque feedback component Tfb set to zero. This appropriately minimizes degradation of steering feeling due to application of an abnormal assist torque.
(2) When the target steering torque Th* exceeds the maximum torque Tmax, the target assist torque calculation unit 61 sets the torque feedback component Tfb to zero, by applying the end reaction force Fie. Therefore, when restricting turning of the steered wheels 3 by applying the end reaction force Fie, it is possible to prevent degradation of steering feeling due to application of an abnormal assist torque.
   Hereinafter, a steering control device according to a second embodiment will be described with reference to the drawings. The only major difference between the present embodiment and the first embodiment is the calculation process of the torque feedback component correction unit 75. Therefore, for simplicity of explanation, elements identical to those in the first embodiment bear the same reference numerals and are not further described.
   As illustrated in FIG. 2, a torque feedback component correction unit 75 of the present embodiment corrects the torque feedback component Tfb based on the reaction force component Fir, and calculates the target assist torque Ta* based on the corrected torque feedback component Tfb and the reaction force component Fir.
   Specifically, the torque feedback component correction unit 75 determines whether the absolute value of the reaction force component Fir exceeds the threshold torque Tth that is set in advance. Then, the torque feedback component correction unit 75 simply obtains the torque feedback component Tfb as the target assist torque Ta* when the absolute value of the reaction force component Fir is less than or equal to the threshold torque Tth. On the other hand, when the absolute value of the reaction force component Fir is greater than the threshold torque Tth, the torque feedback component correction unit 75 sets the torque feedback component Tfb to zero, calculates the target assist torque Ta* based on the reaction force component Fir, and applies a negative assist torque to the steering mechanism 4.
   In the following, the steering feeling provided by the steering control device 6 will be described. When steering is performed within the range where the pinion angle θp does not exceed the threshold angle θie, the assist torque is applied to the steering mechanism 4 such that the steering torque Th that the driver needs to input becomes equal to the target steering torque Th* based on the reaction force component Fir. As a result, a suitable steering feeling is achieved as in the first embodiment. On the other hand, when steering is performed to a point close to the rack end so that the reaction force component Fir exceeds the threshold torque Tth (the target steering torque Th* exceeds the maximum torque Tmax), the target assist torque Ta* is calculated based on the reaction force component Fir, and a negative assist torque is applied to the steering mechanism 4. As a result, the driver receives a steering reaction force against steering. This prevents further steering in a state where steering is performed to a point close to the rack end.
   As is understood from the above, the present embodiment provides the following advantageous effect, in addition to the advantageous effect similar to the advantageous effect (2) of the first embodiment.
(3) In the case where the steering torque Th cannot be accurately detected due to the absolute value of the target steering torque Th* exceeding the maximum torque Tmax and hence the torque feedback component Tfb may take an abnormal value, the target assist torque calculation unit 61 sets the torque feedback component Tfb to zero, and calculates the target assist torque Ta* based on the reaction force component Fir. This prevents application of an assist torque based on an abnormal torque feedback component Tfb, and minimizes degradation of steering feeling. Further, since a negative assist torque based on the end reaction force Fie is applied, it is possible to appropriately prevent further steering in a direction in which turning of the steered wheels 3 is restricted.

Hereinafter, a steering control device according to a third embodiment will be described with reference to the drawings. Elements identical to those in the first embodiment bear the same reference numerals and are not further described.

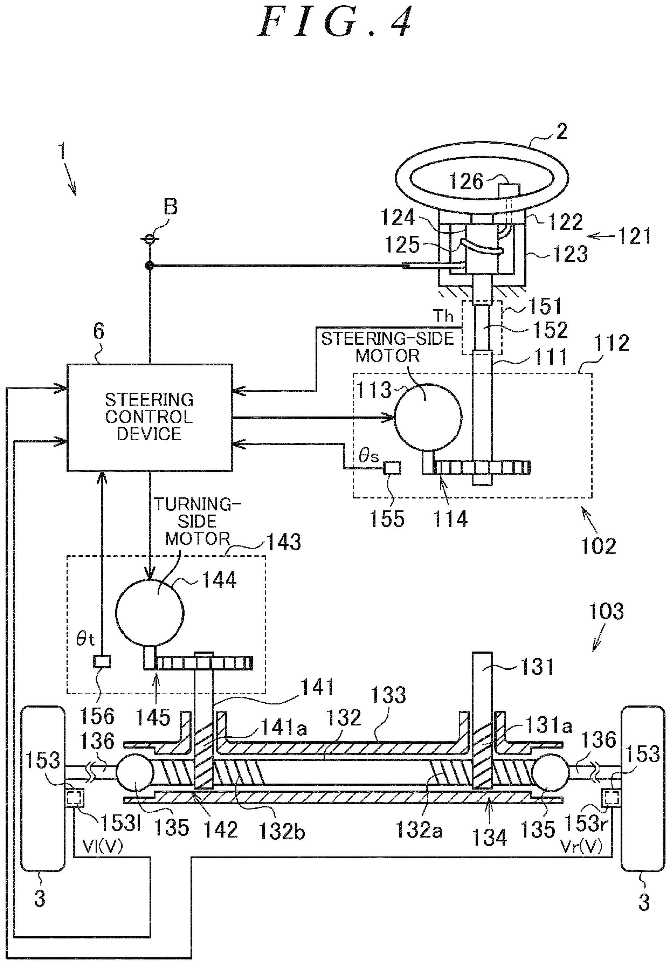

As illustrated in FIG. 4, a steering system 1 of the present embodiment is configured as a steer-by-wire steering system. The steering system 1 includes a steering unit 102 steered by the driver, and a turning unit 103 that turns steered wheels 3 in accordance with steering of the steering unit 102 by the driver.

The steering unit 102 includes a steering shaft 111 to which a steering wheel 2 is fixed, and a steering-side actuator 112 capable of applying a steering reaction force to the steering shaft 111. The steering-side actuator 112 includes a steering-side motor 113 serving as a drive source, and a steering-side reducer 114 that transmits a rotation of the steering-side motor 113 to the steering shaft 111 at a reduced speed. The steering-side motor 113 of the present embodiment is, for example, a three-phase brushless motor.

A spiral cable device 121 is coupled to the steering wheel 2. The spiral cable device 121 includes a first housing 122 fixed to the steering wheel 2. The spiral cable device 121 further includes a second housing 123 fixed to a vehicle body, a tubular member 124 fixed to the second housing 123 and housed in a space defined by the first and second housings 122 and 123, and a spiral cable 125 wound around the tubular member 124. The steering shaft 111 is inserted through the tubular member 124. The spiral cable 125 is an electric wire connecting a horn 126 fixed to the steering wheel 2 and an in-vehicle battery B and so on fixed to the vehicle body. The length of the spiral cable 125 is sufficiently longer than a distance between the horn 126 and the in-vehicle battery B so as to supply electric power to the horn 126 while allowing the steering wheel 2 to rotate within the range corresponding to that length.

The turning unit 103 includes a first pinion shaft 131 serving as a rotary shaft that can be converted into a steered angle of the steered wheels 3, a rack shaft 132 coupled to the first pinion shaft 131, a rack housing 133 reciprocally accommodating the rack shaft 132, and a first rack-and-pinion mechanism 134 that converts a rotation of the first pinion shaft 131 into a reciprocating motion of the rack shaft 132. The first pinion shaft 131 and the rack shaft 132 are arranged at a prescribed crossing angle. First pinion teeth 131a formed on the first pinion shaft 131 and first rack teeth 132a formed on the rack shaft 132 mesh with each other, thereby forming the first rack-and-pinion mechanism 134. Note that the rack shaft 132 is reciprocally supported at an axial end thereof by the first rack-and-pinion mechanism 134. A tie rod 136 is coupled to each end of the rack shaft 132 via a rack end 135 including a ball joint. A distal end of the tie rod 136 is coupled to a knuckle (not illustrated) to which the steered wheel 3 is attached.

The turning unit 103 further includes a second pinion shaft 141, a second rack-and-pinion mechanism 142 that converts a rotation of the second pinion shaft 141 into a reciprocating motion of the rack shaft 132, and a turning-side actuator 143 that applies a turning force for turning the steered wheels 3 to the rack shaft 132 via the second pinion shaft 141. The turning-side actuator 143 includes a turning-side motor 144 serving as a drive source, and a turning-side reducer 145 that transmits rotation of the turning-side motor 144 to the second pinion shaft 141 at a reduced speed. The second pinion shaft 141 and the rack shaft 132 are arranged at a prescribed crossing angle. Second pinion teeth 141a formed on the second pinion shaft 141 and second rack teeth 132b formed on the rack shaft 132 mesh with each other, thereby forming the second rack-and-pinion mechanism 142. Note that the rack shaft 132 is reciprocally supported at another axial end thereof by the second rack-and-pinion mechanism 142. Note that the turning-side motor 144 of the present embodiment is, for example, a three-phase brushless motor.

In the steering system 1 having the configuration described above, the second pinion shaft 141 is rotated by the turning-side actuator 143 in accordance with a steering operation by the driver. The rotation is converted into an axial movement of the rack shaft 132 by the second rack-and-pinion mechanism 142, so that the steered angle of the steered wheels 3 is changed. Meanwhile, the steering-side actuator 112 applies a steering reaction force against steering by the driver to the steering wheel 2.

Hereinafter, the electrical configuration of the present embodiment will be described. The steering control device 6 is connected to the steering-side actuator 112 (steering-side motor 113) and the turning-side actuator 143 (turning-side motor 144), and controls the operations of these elements. A torque sensor 151 that detects a steering torque Th applied to the steering shaft 111 is connected to the steering control device 6. The torque sensor 151 is disposed on the steering wheel 2 side with respect to a portion of the steering shaft 111 connected to the steering-side actuator 112 (steering-side reducer 114). As in the first embodiment, the torque sensor 151 detects the steering torque Th based on a torsion amount of a torsion bar 152. A detectable maximum torque Tmax is set for the torque sensor 151 based on the specifications. A right front wheel sensor 153r and a left front wheel sensor 1531 are provided on a hub unit 153 that rotatably supports the steered wheels 3 via a drive shaft (not illustrated). The right front wheel sensor 153r and the left front wheel sensor 1531 are connected to the steering control device 6. The right front wheel sensor 153r and the left front wheel sensor 1531 detect wheel speeds Vr and Vl of the respective steered wheels 3. The steering control device 6 of the present embodiment detects an average value of the wheel speeds Vr and Vl as a vehicle speed V. A steering-side rotation sensor 155 and a turning-side rotation sensor 156 are also connected to the steering control device 6. The steering-side rotation sensor 155 detects, as a detection value indicating a steering amount of the steering unit 102, a rotation angle θs of the steering-side motor 113 in terms of a relative angle within 360°. The turning-side rotation sensor 156 detects, as a detection value indicating a turning amount of the turning unit 103, a rotation angle θt of the turning-side motor 144. The detected steering torque Th and rotation angles θs and θt take a positive value when steering is performed in a first direction (right in the present embodiment), and take a negative value when steering is performed in a second direction (left in the present embodiment). The steering control device 6 controls operations of the steering-side motor 113 and the turning-side motor 144 based on these various state quantities.

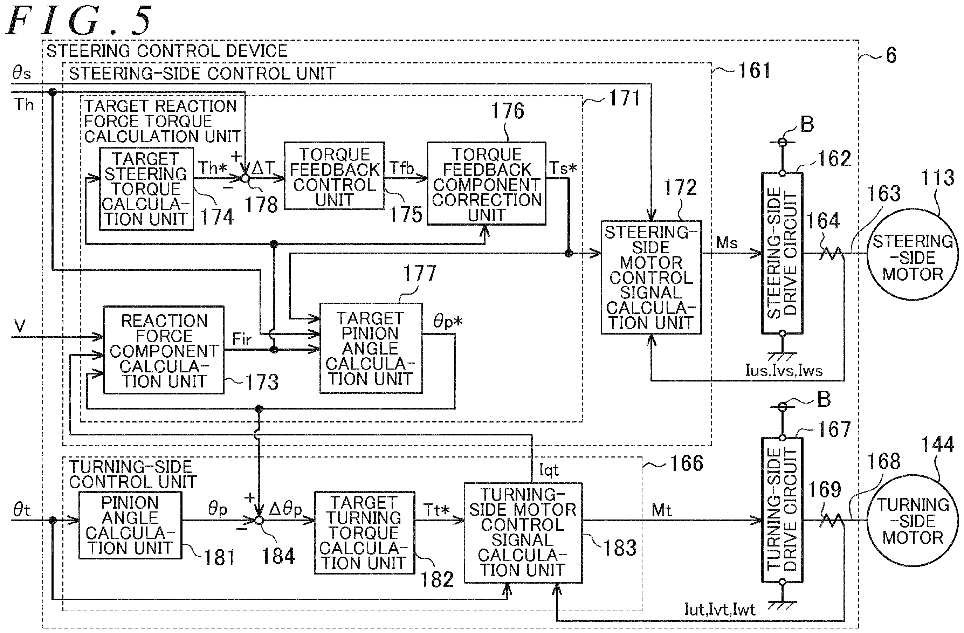

Hereinafter, the configuration of the steering control device 6 will be described in detail. As illustrated in FIG. 5, the steering control device 6 includes a steering-side control unit 161 that outputs a steering-side motor control signal Ms, and a steering-side drive circuit 162 that supplies drive power to the steering-side motor 113 based on the steering-side motor control signal Ms. Current sensors 164 are connected to the steering-side control unit 161. The current sensors 164 detect phase current values Ius, Ivs, and Iws of the steering-side motor 113 flowing through connection lines 163 between the steering-side drive circuit 162 and motor coils of respective phases of the steering-side motor 113. In FIG. 5, the connection lines 163 of the respective phases and the current sensors 164 of the respective phases are collectively depicted as a single connection line 163 and a single current sensor 164, respectively, for the sake of convenience.

The steering control device 6 includes a turning-side control unit 166 that outputs a turning-side motor control signal Mt, and a turning-side drive circuit 167 that supplies drive power to the turning-side motor 144 based on the turning-side motor control signal Mt. Current sensors 169 are connected to the turning-side control unit 166. The current sensors 169 detect phase current values Iut, Ivt, and Iwt of the turning-side motor 144 flowing through connection lines 168 between the turning-side drive circuit 167 and motor coils of respective phases of the turning-side motor 144. In FIG. 5, the connection lines 168 of the respective phases and the current sensors 169 of the respective phases are collectively depicted as a single connection line 168 and a single current sensor 169, respectively, for the sake of convenience. Each of the steering-side drive circuit 162 and the turning-side drive circuit 167 of the present embodiment is a known PWM inverter including a plurality of switching elements (such as FETs). Each of the steering-side motor control signal Ms and the turning-side motor control signal Mt is a gate ON/OFF signal that determines the ON/OFF state of each switching element.

The steering-side control unit 161 and the turning-side control unit 166 output the steering-side motor control signal Ms and the turning-side motor control signal Mt to the steering-side drive circuit 162 and the turning-side drive circuit 167, thereby supplying drive power from the in-vehicle battery B to the steering-side motor 113 and the turning-side motor 144. In this manner, the steering-side control unit 161 and the turning-side control unit 166 control the operations of the steering-side motor 113 and the turning-side motor 144.

First, the configuration of the steering-side control unit 161 will be described. The steering-side control unit 161 executes calculation processes indicated by respective control blocks described below at prescribed calculation intervals so as to generate the steering-side motor control signal Ms. The steering-side control unit 161 receives the vehicle speed V, the steering torque Th, the rotation angle θs, and the phase current values Ius, Ivs, and Iws described above, and also receives a q-axis current value Iqt as a drive current of the turning-side motor 144. Then, the steering-side control unit 161 generates and outputs the steering-side motor control signal Ms based on these state quantities.

Specifically, the steering-side control unit 161 includes a target reaction force torque calculation unit 171 that calculates a target reaction force torque Ts* as the target value of the steering reaction force, and a steering-side motor control signal calculation unit 172 that outputs the steering-side motor control signal Ms.

The target reaction force torque calculation unit 171 includes a reaction force component calculation unit 173 that calculates a reaction force component Fir as a force against rotation of the steering wheel 2. The target reaction force torque calculation unit 171 further includes a target steering torque calculation unit 174 that calculates a target steering torque Th*, a torque feedback control unit 175 that calculates a torque feedback component Tfb by performing a torque feedback calculation, and a torque feedback component correction unit 176 that calculates the target reaction force torque Ts* based on a value obtained by correcting the torque feedback component Tfb. The target reaction force torque calculation unit 171 further includes a target pinion angle calculation unit 177 that calculates a target pinion angle θp* as the target angle of the pinion angle θp of the first pinion shaft 131.

The reaction force component calculation unit 173 receives the vehicle speed V, the target pinion angle θp*, and the q-axis current value Iqt of the turning-side motor 144. The reaction force component calculation unit 173 calculates a current axial force Fer in the same manner as the current axial force calculation unit 83 of the first embodiment, except that the q-axis current value Iqt of the turning-side motor 144 is used in place of the q-axis current value Iq of the motor 21 of the first embodiment. Further, the reaction force component calculation unit 173 calculates an angle axial force Fib in the same manner as the angle axial force calculation unit 84 of the first embodiment, except that the target pinion angle θp* is used in place of the pinion angle θp. Then, the reaction force component calculation unit 173 calculates an allocation axial force Fd, based on the current axial force Fer, the angle axial force Fib, and the vehicle speed V, in the same manner as in the first embodiment.

Further, the reaction force component calculation unit 173 calculates an end reaction force Fie in the same manner as the end reaction force calculation unit 82 of the first embodiment, except that the target pinion angle θp* is used in place of the pinion angle θp. Note that the threshold angle θie (pinion angle θp in the virtual rack end position) is set to be on the neutral-position side with respect to the steering angle of the steering wheel 2 in the steering end position defined by the maximum allowable limit by the spiral cable device 121 in the relationship with the mechanical structure of the steering unit 102 on the assumption that the steering unit 102 is coupled to the turning unit 103. That is, in the steering system 1 of the present embodiment, the virtual rack end position is set as the steering angle limit position of the turning unit 103, and the steering end position is set as the steering angle limit position of the steering unit 102. Assuming that the first pinion shaft 131 is coupled to the steering shaft 111, the turning unit 103 (steered wheels 3) reaches the steering angle limit position first.

Then, the reaction force component calculation unit 173 calculates the reaction force component Fir based on the allocation axial force Fd and the end reaction force Fie, in the same manner as in the first embodiment. The thus calculated reaction force component Fir is output to the target steering torque calculation unit 174, the torque feedback component correction unit 176, and the target pinion angle calculation unit 177.

The target steering torque calculation unit 174 calculates the target steering torque Th*, based on the reaction force component Fir, in the same manner as the first embodiment. The torque feedback control unit 175 receives a torque deviation ΔT calculated by subtracting the target steering torque Th* from the steering torque Th in a subtractor 178. Then, the torque feedback control unit 175 calculates the torque feedback component Tfb based on the torque deviation ΔT, in the same manner as the first embodiment.

The torque feedback component correction unit 176 receives the reaction force component Fir and the torque feedback component Tfb. The torque feedback component correction unit 176 corrects the torque feedback component Tfb based on the reaction force component Fir, and calculates the target reaction force torque Ts* based on the corrected torque feedback component Tfb and the reaction force component Fir.

Specifically, the torque feedback component correction unit 176 determines whether the absolute value of the reaction force component Fir exceeds the threshold torque Tth that is set in advance. Then, when the absolute value of the reaction force component Fir is less than or equal to the threshold torque Tth, the torque feedback component correction unit 176 simply obtains the torque feedback component Tfb as the target reaction force torque Ts*. On the other hand, when the absolute value of the reaction force component Fir is greater than the threshold torque Tth, the torque feedback component correction unit 176 sets the torque feedback component Tfb to zero, and calculates the target reaction force torque Ts* based on the reaction force component Fir. The thus calculated target reaction force torque Ts* is output to the target pinion angle calculation unit 177 and the steering-side motor control signal calculation unit 172.

The target pinion angle calculation unit 177 receives the steering torque Th, the reaction force component Fir, and the target reaction force torque Ts*. The target pinion angle calculation unit 177 calculates the target pinion angle θp* based on these state quantities, using a model formula. The model formula that can be used is, for example, an expression defining the relationship between the torque and rotation angle of a rotary shaft that rotates with rotation of the steering wheel 2 in a steering system in which the steering wheel 2 is mechanically coupled to the steered wheels 3. The thus calculated target pinion angle θp* is output to the reaction force component calculation unit 173 and the turning-side control unit 166.

The steering-side motor control signal calculation unit 172 receives the rotation angle θs and the phase current values Ius, Ivs, and Iws, in addition to the target reaction force torque Ts*. The steering-side motor control signal calculation unit 172 of the present embodiment calculates a q-axis target current value Iqs* on the q-axis in the dq coordinate system, based on the target reaction force torque Ts*. The steering-side motor control signal calculation unit 172 calculates the q-axis target current value Iqs* having an absolute value that increases as the absolute value of the target reaction force torque Ts* increases. Note that in the present embodiment, a d-axis target current value Ids* on the d-axis is basically set to zero. Then, the steering-side motor control signal calculation unit 172 performs current feedback control in the dq coordinate system, thereby generating the steering-side motor control signal Ms that is output to the steering-side drive circuit 162, as in the first embodiment.

The thus calculated steering-side motor control signal Ms is output to the steering-side drive circuit 162. Thus, a drive power corresponding to the steering-side motor control signal Ms is supplied from the steering-side drive circuit 162 to the steering-side motor 113. Then, the steering-side motor 113 applies a steering reaction force based on the target reaction force torque Ts* to the steering wheel 2.

In the following, the turning-side control unit 166 will be described. The turning-side control unit 166 executes calculation processes indicated by respective control blocks described below at prescribed calculation intervals so as to generate the turning-side motor control signal Mt. The turning-side control unit 166 receives the rotation angle θt, the target pinion angle θp*, and the phase current values Iut, Ivt, and Iwt of the turning-side motor 144 described above. Then, the turning-side control unit 166 generates and outputs the turning-side motor control signal Mt based on these state quantities.

Specifically, the turning-side control unit 166 includes a pinion angle calculation unit 181 that calculates the pinion angle θp of the first pinion shaft 131. The turning-side control unit 166 further includes a target turning torque calculation unit 182 that calculates a target turning torque Tt* as the target value of the turning force, and a turning-side motor control signal calculation unit 183 that outputs the turning-side motor control signal Mt.

The pinion angle calculation unit 181 receives the rotation angle θt of the turning-side motor 144. The pinion angle calculation unit 181 converts the received rotation angle θt into an absolute angle by, for example, counting the number of rotations of the turning-side motor 144 from a neutral position with which the vehicle travels straight ahead. Then, the pinion angle calculation unit 181 calculates the pinion angle θp, by multiplying the rotation angle converted into an absolute angle by a conversion factor Kt based on a rotational speed ratio of the turning-side reducer 145 and a rotational speed ratio of the first and second rack-and-pinion mechanisms 134 and 142. That is, the pinion angle θp corresponds to the steering angle of the steering wheel 2 on the assumption that the first pinion shaft 131 is coupled to the steering shaft 111. The thus calculated pinion angle θp is output to a subtractor 184. The subtractor 184 receives the target pinion angle θp*, in addition to the pinion angle θp.

The target turning torque calculation unit 182 receives an angle deviation Δθp calculated by subtracting the pinion angle θp from the target pinion angle θp* in the subtractor 184. Then, the target turning torque calculation unit 182 calculates the target turning torque Tt* representing the target value of the turning force that is applied by the turning-side motor 144, as a control amount for performing feedback control to feed back the pinion angle θp to the target pinion angle θp*, based on the angle deviation Δθp. Specifically, the target turning torque calculation unit 182 calculates, as the target turning torque Tt*, the sum of the output values of a proportional element, an integral element, and a differential element to which the angle deviation Δθp is input.

The turning-side motor control signal calculation unit 183 receives the rotation angle θt and the phase current values Iut, Ivt, and Iwt, in addition to the target turning torque Tt*. The turning-side motor control signal calculation unit 183 calculates a q-axis target current value Iqt* on the q-axis in the dq coordinate system, based on the target turning torque Tt*. The turning-side motor control signal calculation unit 183 calculates the q-axis target current value Iqt* having an absolute value that increases as the absolute value of the angle deviation Δθp increases. Note that in the present embodiment, a d-axis target current value Idt* on the d-axis is basically set to zero. Then, the turning-side motor control signal calculation unit 183 performs current feedback control in the dq coordinate system, thereby generating the turning-side motor control signal Mt that is output to the turning-side drive circuit 167, as in the first embodiment. Note that the q-axis current value Iqt on the q-axis calculated in the course of generating the turning-side motor control signal Mt is output to the reaction force component calculation unit 173.

The thus calculated turning-side motor control signal Mt is output to the turning-side drive circuit 167. Thus, drive power corresponding to the turning-side motor control signal Mt is supplied from the turning-side drive circuit 167 to the turning-side motor 144. Then, the turning-side motor 144 applies a turning force based on the target turning torque Tt* to the steered wheels 3.

In the following, the steering feeling provided through reaction force control will be described. When steering is performed in a range where the target pinion angle θp* does not exceed the threshold angle θie, a steering reaction force indicated by the target reaction force torque Ts* based on the torque feedback component Tfb is applied to the steering wheel 2, so that a suitable steering feeling is achieved. On the other hand, when the target pinion θp* exceeds the threshold angle θie so that the reaction force component Fir exceeds the threshold torque Tth (the target steering torque Th* exceeds the maximum torque Tmax), the target reaction force torque Ts* is calculated based on the reaction force component Fir, and a large steering reaction force is applied to the steering wheel 2. Therefore, the driver is prevented from performing steering. This prevents further steering in a state where the steered wheels 3 are steered to a point close to the rack end.

The advantageous effects of the present embodiment will be described below.
(4) In the case where the steering torque Th cannot be accurately detected due to the absolute value of the target steering torque Th* exceeding the maximum torque Tmax and hence the torque feedback component Tfb takes an abnormal value, the target reaction force torque calculation unit 171 sets the torque feedback component Tfb to zero, and calculates the target reaction force torque Ts* based on the reaction force component Fir. This prevents application of a steering reaction force based on an abnormal torque feedback component Tfb, and minimizes degradation of steering feeling. Moreover, since a steering reaction force based on the reaction force component Fir is applied, when steering is performed to a point close to the rack end and hence turning of the steered wheels 3 in the turning direction is restricted, further steering is appropriately prevented.
(5) When the target steering torque Th* exceeds the maximum torque Tmax, the target reaction force torque calculation unit 171 sets the torque feedback component Tfb to zero, by applying the end reaction force Fie. Therefore, when restricting turning of the steered wheels 3 by applying the end reaction force Fie, it is possible to prevent degradation of steering feeling due to application of an abnormal reaction force torque.

The above embodiments may be modified as described below. The embodiments and the following modifications may be combined as long as no technical inconsistency arises.

In the second embodiment, a negative assist torque is applied based on the end reaction force Fie. However, the present invention is not limited thereto. For example, it is possible to minimize the bounce caused by the rack end 18 contacting the rack housing 13 by instantaneously applying a positive assist torque (damping component).

In the above embodiments, the torque feedback component correction units 75 and 176 receive the reaction force component Fir, and set the torque feedback component Tfb to zero when the reaction force component Fir exceeds the threshold torque Tth. However, the present invention is not limited thereto. For example, the torque feedback component correction units 75 and 176 may receive the target steering torque Th*, and set the torque feedback component Tfb to zero when the target steering torque Th* exceeds the maximum torque Tmax.

In the above embodiments, when the reaction force component Fir exceeds the threshold torque Tth, the torque feedback component Tfb is set to zero. However, the present invention is not limited thereto. When the reaction force component Fir exceeds the threshold torque Tth, the torque feedback component Tfb may be corrected to a value greater than zero as long as the absolute value of the torque feedback component Tfb is smaller than when the reaction force component Fir does not exceed the threshold torque Tth. Even with this configuration, it is possible to minimize degradation of steering feeling due to application of an abnormal assist torque or a steering reaction force.

In the above embodiments, even when turning of the steered wheels 3 is not restricted, if the target steering torque Th* exceeds the maximum torque Tmax, the target assist torque Ta* or the target reaction force torque Ts* may be calculated based on the torque feedback component Tfb with a reduced absolute value.

In the above embodiments, the allocation axial force Fd is calculated based on the current axial force Fer and the angle axial force Fib. However, the present invention is not limited thereto. The allocation axial force Fd may be calculated based on other state quantities in addition to or in place of these axial forces. Examples of axial forces based on other state quantities may include an axial force based on a value detected by an axial force sensor that detects the axial force of the rack shaft 12 or 132, an axial force based on a tire force detected by the hub unit 43 or 153, a vehicle state quantity axial force based on a yaw rate and a lateral acceleration.

In the above embodiments, the end reaction force Fie is used as a restriction reaction force. However, the present invention is not limited thereto. For example, when the steered wheel 3 is turned and brought into contact with an obstacle such as a curb, an obstacle contact reaction force as a reaction force against further steering in a direction toward the obstacle may be used as a restriction reaction force. In this case, a situation where the steered wheel 3 is turned and brought into contact with an obstacle corresponds to a situation where turning of the steered wheels 3 are restricted.

In the first and second embodiments, the current axial force Fer is calculated based on the q-axis current value Iq. However, the present invention is not limited thereto. For example, the current axial force Fer may be calculated based on the q-axis target current value Iq*. Similarly, in the third embodiment, the current axial force Fer may be calculated based on, for example, the q-axis target current value Iqt*.

In the third embodiment, the angle axial force Fib is calculated based on the target pinion angle θp*. However, the present invention is not limited thereto. For example, the angle axial force Fib may be calculated based on the pinion angle θp, or may be calculated using other methods, such as methods using other parameters such as the steering torque Th and the vehicle speed V.

In the third embodiment, the rack shaft 132 may be supported by, for example, a bush in place of the first rack-and-pinion mechanism 134. In the third embodiment, the turning-side actuator 143 may be, for example, one in which the turning-side motor 144 is arranged coaxially with the rack shaft 132, or one in which the turning-side motor 144 is arranged parallel to the rack shaft 132.

In the third embodiment, the steering system 1 controlled by the steering control device 6 is a linkless steer-by-wire steering system in which power transmission is disconnected between the steering unit 102 and the turning unit 103. However, the present invention is not limited thereto. The steering system 1 may be a steer-by-wire system in which power transmission can be connected and disconnected between the steering unit 102 and the turning unit 103 by a clutch.

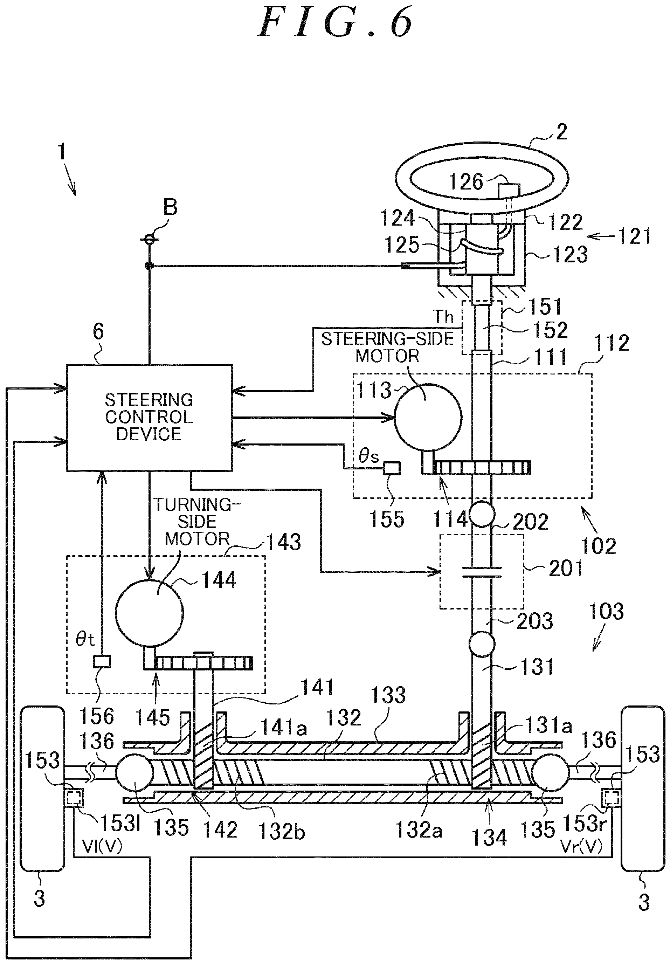

For example, in the example illustrated in FIG. 6, a clutch 201 is disposed between the steering unit 102 and the turning unit 103. The clutch 201 is coupled to the steering shaft 111 through an input-side intermediate shaft 202 fixed to its input-side element, and is coupled to the first pinion shaft 131 through an output-side intermediate shaft 203 fixed to its output-side element. When the clutch 201 is disconnected in response to a control signal from the steering control device 6, the steering system 1 is put into a steer-by-wire mode. Meanwhile, when the clutch 201 is connected, the steering system 1 is put into an electric power steering mode.

## Claims

1. A steering control device that controls a steering system, the steering system including an assist mechanism having a motor as a drive source to apply an assist torque for assisting a steering operation to a steering mechanism, the steering control device controlling an operation of the motor to generate a motor torque corresponding to a target assist torque as a target value of the assist torque, the steering control device comprising:
a target assist torque calculation unit that calculates the target assist torque, wherein:
the target assist torque calculation unit includes
a target steering torque calculation unit that calculates a target steering torque as a target value of a steering torque detected by a torque sensor, and
a torque feedback control unit that calculates a torque feedback component, by performing torque feedback control that makes the steering torque follow the target steering torque;
the target assist torque calculation unit calculates the target assist torque based on the torque feedback component; and
when an absolute value of the target steering torque exceeds a maximum torque detectable by the torque sensor, the target assist torque calculation unit calculates the target assist torque, based on the torque feedback component having an absolute value smaller than when the absolute value of the target steering torque does not exceed the maximum torque.

2. The steering control device according to claim 1, wherein when the absolute value of the target steering torque exceeds the maximum torque, the target assist torque calculation unit calculates the target assist torque based on the torque feedback component that is set to zero.

3. The steering control device according to claim 1 or 2, wherein:
the target assist torque calculation unit further includes
an axial force calculation unit that calculates an axial force applied from steered wheels to a steered shaft to which the steered wheels are connected, and
a restriction reaction force calculation unit that, when turning of the steered wheels in at least one direction is restricted, calculates a restriction reaction force for restricting steering that turns the steered wheels in the at least one direction; and
the target steering torque calculation unit calculates, using a reaction force component based on the axial force and the restriction reaction force, the target steering torque such that the absolute value of the target steering torque increases as an absolute value of the reaction force component increases.

4. The steering control device according to claim 3, wherein when turning of the steered wheels in at least one direction is restricted and the absolute value of the target steering torque exceeds the maximum torque, the target assist torque calculation unit calculates the target assist torque based on the torque feedback component and the restriction reaction force.

5. A steering control device that controls a steering system, the steering system being configured such that power transmission is disconnected between a steering unit and a turning unit that turns steered wheels in accordance with steering input to the steering unit, the steering control device controlling an operation of a steering-side motor provided in the steering unit to generate a motor torque corresponding to a target reaction force torque as a target value of a steering reaction force against the steering input to the steering unit, the steering control device comprising:
a target reaction force torque calculation unit that calculates the target reaction force torque, wherein:
the target reaction force torque calculation unit includes
an axial force calculation unit that calculates an axial force applied from the steered wheels to a steered shaft to which the steered wheels are connected,
a restriction reaction force calculation unit that, when turning of the steered wheels in at least one direction is restricted, calculates a restriction reaction force for restricting steering that turns the steered wheels in the at least one direction,
a target steering torque calculation unit that calculates, using a reaction force component based on the axial force and the restriction reaction force, a target steering torque as a target value of a steering torque detected by a torque sensor such that an absolute value of the target steering torque increases as an absolute value of the reaction force component increases, and
a torque feedback control unit that calculates a torque feedback component, by performing torque feedback control that makes the steering torque follow the target steering torque;
the target reaction force torque calculation unit calculates the target reaction force torque based on the torque feedback component; and
when the absolute value of the target steering torque exceeds a maximum torque detectable by the torque sensor, the target reaction force torque calculation unit calculates the target reaction force torque, based on the torque feedback component having an absolute value smaller than when the absolute value of the target steering torque does not exceed the maximum torque and the restriction reaction force.
